# EUROPEAN PATENT APPLICATION

(11) **EP 2 242 142 A1**
(43) Date of publication of application: **20.10.2010**
(21) Application number: 10002631.9
(22) Date of filing: 12.03.2010
(51) Int. Cl.: H01Q 1/08, H01Q 1/12, H01Q 3/04, F16H 1/16, F16H 35/10

(54) **Rotating mechanism having buffering function**

(30) Priority: 13.04.2009 TW 098206051; 16.11.2009 CN 200920266601 U
(71) Applicant: MOTECK ELECTRIC CORP., Shijr City Taipei Hsien (TW)
(72) Inventor: Hung, Chih-Lee, Shijr City Taipei Hsien (TW)
(74) Representative: Glawe, Delfs, Moll

(57) **Abstract**

A rotating mechanism having a buffering function is disclosed to include a worm gear mounted in a holder block for rotating an antenna through a transmission rod and a rotating tube, a worm meshed with the worm gear, a pinion fastened to one end of the worm and rotatable by a motor, a pivot connector pivotally coupled between the worm and a part in the holder block and a spring member coupled between the pivot connector and the worm and defining therein a biasing space within which the worm is biasable relative to the pivot connector to avoid sticking, assuring smooth operation of the motor and stable supply of electric current to the motor

## Description

This application claims priority benefit of Taiwan patent application number 098206051, filed on April 13, 2009 and China patent application number 200920266601.1, filed on November 16, 2009.

### BACKGROUND OF THE INVENTION

### 1. Field of the Invention:

The present invention relates to a rotating mechanism for adjusting the angular position of an antenna and more particularly, to a rotating mechanism having a buffering function, which uses a spring member to couple a worm to a pivot connector for allowing the worm to be biased relative to the pivot connector to prevent sticking when rotated by a motor through a pinion to drive a worm gear to rotate an antenna via a transmission rod and a rotating tube.

### 2. Description of the Related Art:

An antenna may be used with an antenna rotator so that the antenna can be accurately positioned for the best TV and FM reception. An antenna rotator can automatically turn the antenna to the desired direction and then shuts off when it reaches the desired position. A regular antenna rotator generally comprises a worm and a worm gear. The worm gear is meshed with the worm, and driven by the worm to rotate the antenna through a rotating tube. Conventionally, the worm gear is a plastic gear, and the worm is made of a metal material. If the antenna disc receives an external pressure (for example, a strong wind) during rotation of the plastic worm gear by the metal worm to adjust the angular position of the antenna, an excessively high torque may be produced, causing the worm gear to break or the worm to run idle. When this problem occurs, the antenna will not be accurately adjusted to the desired position. In order to eliminate the aforesaid problem, a metal worm gear may be used to substitute for the aforesaid plastic worm gear.

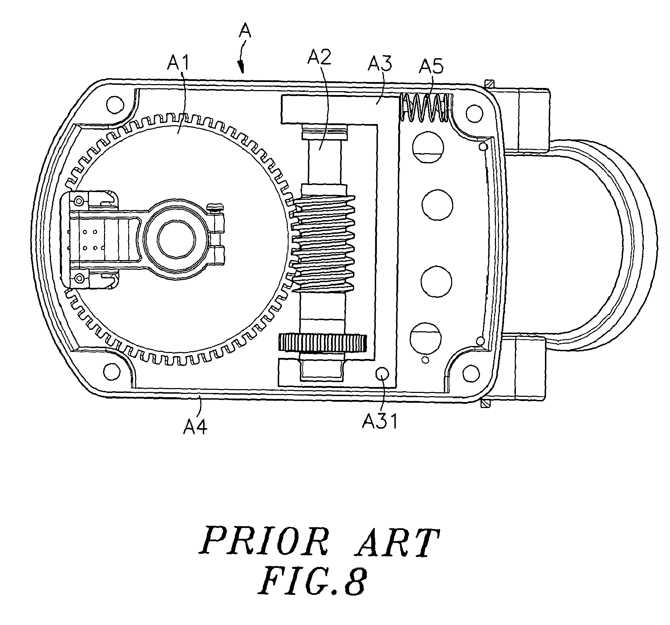

FIG. 8 illustrates an antenna rotating mechanism according to the prior art. According to this design, the antenna rotating mechanism **A** comprises a holder block **A4,** a metal worm gear **A1** pivotally mounted in the holder block **A4,** a swivel frame **A3,** which has a fixed end pivotally connected to the holder block **A4** by a pivot **A31** and a free end supported on a spring member **A5** in the holder block **A4,** and a metal worm **A2** pivotally mounted in the swivel frame **A3** and meshed with the metal worm gear **A1.** During rotation of the worm **A2,** the worm gear **A1** is driven by the worm **A2** to rotate. In case of an overload (for example, when the antenna disc receives a high pressure), the swivel frame **A3** can be turned about the pivot **A31** to displace the worm **A2** relative to the worm gear **A1,** avoiding sticking and preventing a sudden electric current rise, and therefore smooth operation of the motor that rotates the worm **A2** is assured.

However, the aforesaid design is still not perfect. The holder block **A4** must provide a sufficient space for accommodating the worm gear **A1,** the worm **A2,** the swivel frame **A3** and the spring member **A5** and for allowing the swivel frame **A3** to move. In consequence, the antenna rotating mechanism **A** has a heavy structure. Further, the manufacturing cost of this structure of antenna rotating mechanism **A** is high. Further, the installation of this structure of antenna rotating mechanism **A** is complicated.

Therefore, it is desirable to provide a rotating mechanism for antenna, which eliminates the aforesaid drawbacks.

### SUMMARY OF THE INVENTION

The present invention has been accomplished under the circumstances in view. It is the main object of the present invention to provide a rotating mechanism for antenna, which provides a buffering function to prevent sticking of the component parts, assuring smooth operation. It is another object of the present invention to provide a rotating mechanism, which has a simple structure and, which is inexpensive to manufacture and easy to install.

To achieve these and other objects of the present invention, a rotating mechanism having a buffering function comprises a holder block defining therein an accommodation chamber, a transmission rod inserted through the holder block, a rotating tube fastened to the transmission rod and connectable to an antenna, a worm gear fastened to the transmission rod opposite to the rotating tube and suspending in the accommodation chamber, a worm meshed with the worm gear, a pinion fastened to one end of the worm and rotatable by a motor, a pivot connector pivotally coupled between the other end of the worm and a part in the accommodation chamber of the holder block, and a spring member coupled between the pivot connector and the worm and defining therein a biasing space within which the worm is biasable relative to the pivot connector to prevent sticking during operation of the rotating mechanism.

### BRIEF DESCRIPTION OF THE DRAWINGS

FIG. 1 is an elevational view, showing a rotating mechanism for antenna in accordance with a first embodiment of the present invention.

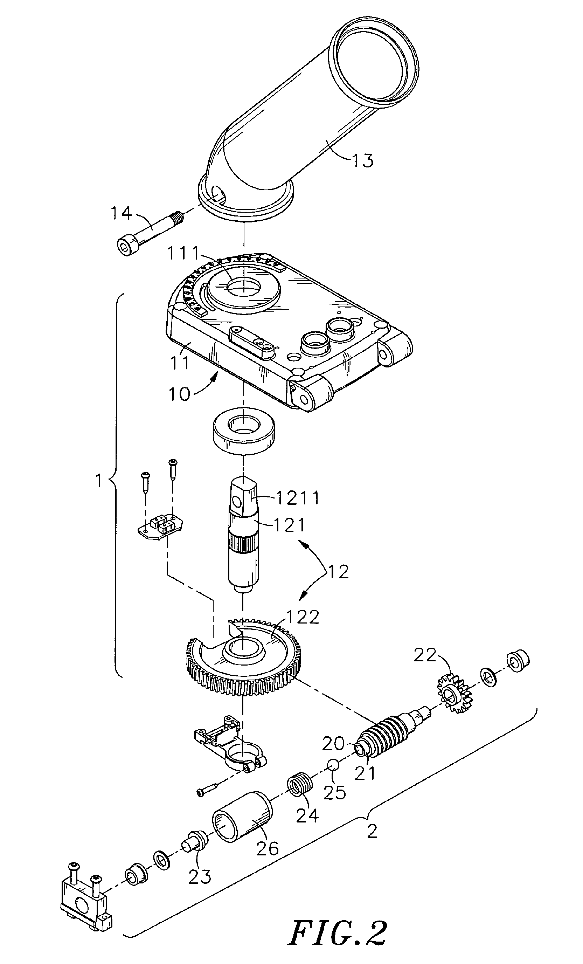

FIG. 2 is an exploded view of the rotating mechanism in accordance with the first embodiment of the present invention.

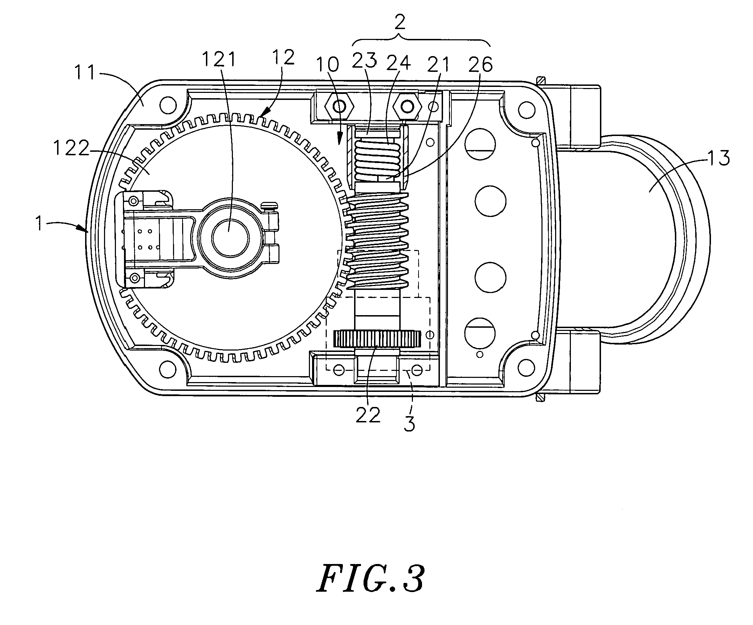

FIG. 3 is a bottom view of the rotating mechanism in accordance with the first embodiment of the present invention.
FIG. 4 is a schematic sectional view in an enlarged scale of a part of the first embodiment of the present invention, showing a normal engagement status between the worm and the worm gear.
FIG. 5 corresponding to FIG. 4, showing the worm biased relative to the pivot connector and the worm gear.
FIG. 6 is a bottom view of a rotating mechanism in accordance with a second embodiment of the present invention.
FIG. 7 is a sectional view of a part of a rotating mechanism in accordance with a third embodiment of the present invention.
FIG. 8 is a bottom view of a rotating mechanism for antenna according to the prior art.

### DETAILED DESCRIPTION OF THE PREFERRED EMBODIMENT

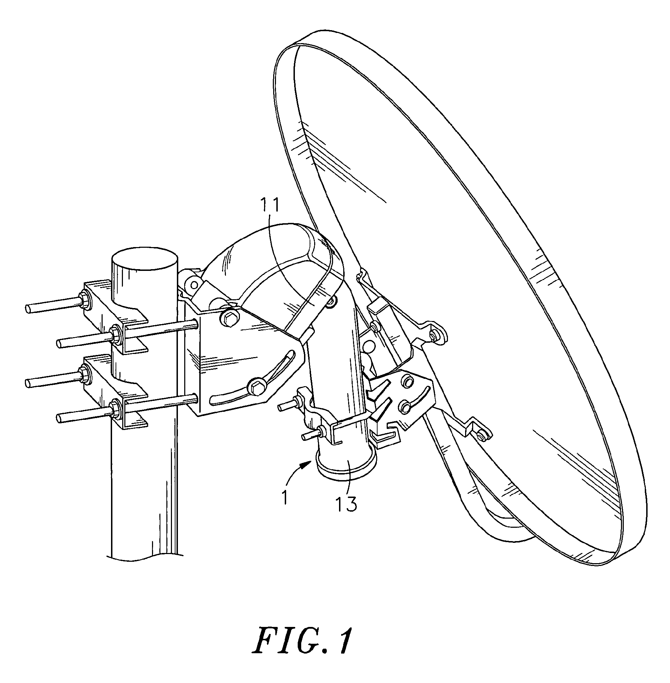

Referring to FIGS. 1∼3, a rotating mechanism having a buffering function in accordance with a first embodiment of the present invention is shown for use to control the angular position of an antenna, comprising a holder block unit **1** and a worm unit **2.**

The holder block unit **1** comprises a holder block **11** that defines therein an accommodation chamber **10** at one side, for example, the bottom side thereof, a driving module **12** accommodated in the accommodation chamber **10** of the holder block **11** and meshed with the worm unit **2,** and a rotating tube **13** connected to and rotatable by the driving module **12.** The driving module **12** comprises a transmission rod **121** and a worm gear **122** fastened to one end of the transmission rod **121** and meshed with the worm unit **2.** The transmission rod **121** has its one end fastened to the worm gear **122** and its other end terminating in an actuating portion **1211** that is inserted through a vertical through hole **111** on the holder block **11** and connected to the rotating tube **13.**

The worm unit **2** is positioned in the accommodation chamber **10** of the holder block **11,** comprising a worm **21** meshed with the worm gear **122,** a pinion **22** fastened to one end of the worm **21** and coupled to and rotatable by a motor **3,** a pivot connector **23** pivotally coupled between one end of the worm **21** opposite to the pinion **22** and a part in the accommodation chamber **10** of the holder block **11,** and elastic means, for example, a spring member **24** supported between the pivot connector **23** and the worm **21.** The spring member **24** defines therein a biasing space **20** within which the worm **21** is biasable relative to the pivot connector **23.**

During installation, the driving module **12** and the worm unit **2** are positioned in the accommodation chamber **10** of the holder block **11** to keep the worm gear **122** and the worm **21** in mesh and to have the actuating portion **1211** of the transmission rod **121** be inserted through the vertical through hole **111** of the holder block **11** and fastened to the rotating tube **13** by a tie screw **14.** Thereafter, the pinion **22** is fastened to the output shaft of the motor **3.** At final, the holder block **11** of the holder block unit **1** is affixed to an antenna support and surrounded by a cover shell. After fixation of the antenna to the rotating tube **13,** the installation of the rotating mechanism is finished.

During the use of the rotating mechanism, the motor **3** is controlled to rotate the pinion **22** and the worm **21,** causing the worm **21** to rotate the worm gear **122.** During rotation of the worm gear **122,** the transmission rod **121** is forced to rotate the rotating tube **13,** thereby adjusting the angular position of the connected antenna.

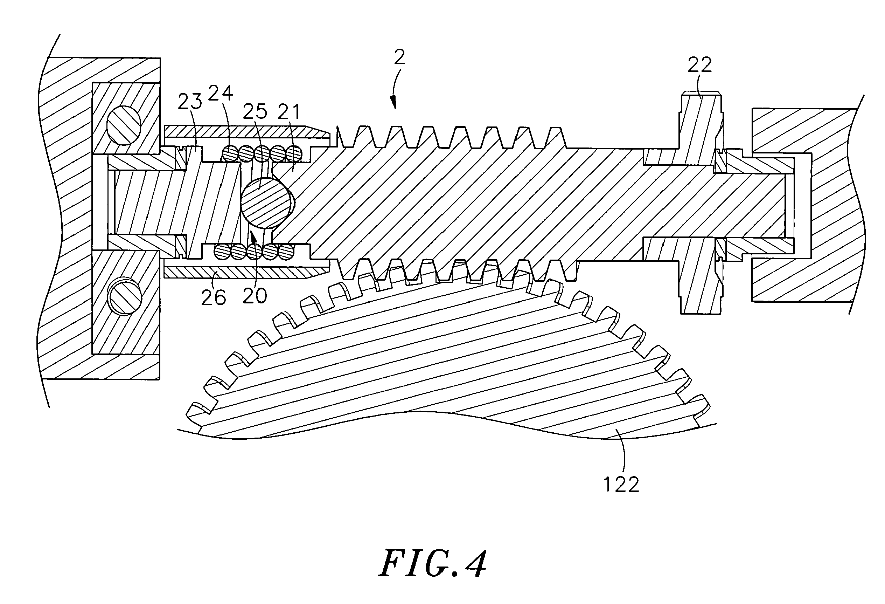

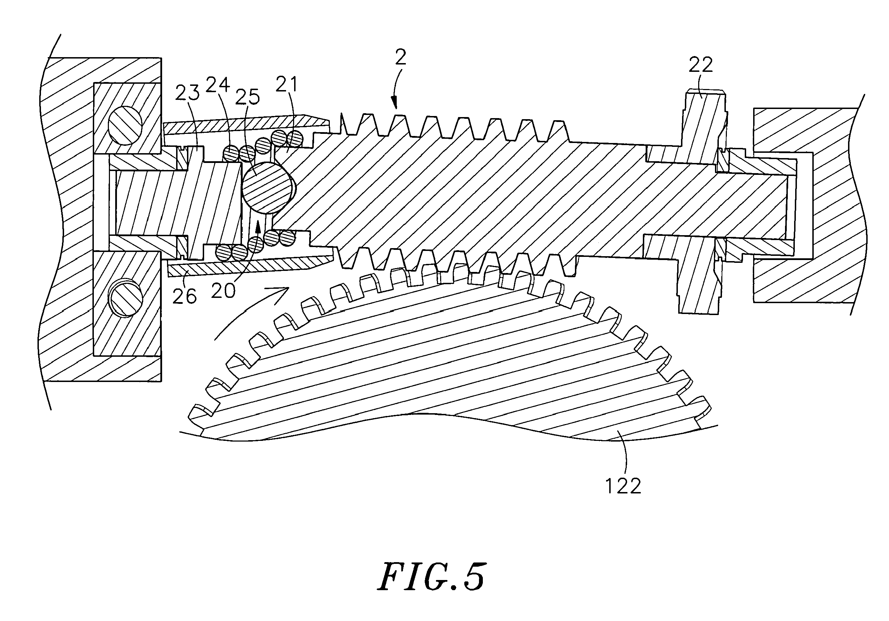

Referring to FIGS. 4 and 5, the worm **21** of the worm unit **2** and the worm gear **122** are made of a metal material and meshed together. The aforesaid biasing space **20** allows the worm **21** to be biased relative to the pivot connector **23** and the worm gear **122** to prevent the worm **21** from getting stuck during operation of the rotating mechanism. Further, a rolling ball **25** is set in the spring member **24** and stopped between the worm **21** and the pivot connector **23,** facilitating biasing of the worm **21** relative to the pivot connector **23** and the worm gear **122** upon an overload. It is to be understood that the end of the worm **21** that is kept in contact with the rolling ball **25** is shaped like a ball socket or curved smoothly inwards for positive positioning of the rolling ball **25.** Further, the rolling ball **25** is constantly kept in contact between the worm **21** and the pivot connector **23** so that the length L of the worm unit **2** will not be reduced when the worm **21** is biased relative to the pivot connector **23** and the worm gear **122.** Further, when the engagement between the teeth of the worm gear **122** and the thread of the worm **21** becomes smooth during rotation of the worm **21,** the spring member **24** immediately returns the worm **21** to its former position. The coupling arrangement between the worm **21** and the pivot connector **23** and the functioning of the spring member **24** and the rolling ball **25** provide a buffering function, assuring smooth transfer of a rotary driving force from the motor **3** through the worm unit **2** to the driving module **12.** Further, a barrel **26** is set around the spring member **24** and the pivot connector **23** to limit the biasing angle of the spring member **24** within a predetermined range. The barrel **26** is biasable with the worm **21.** When the barrel **26** is moved with the worm **21,** it is constantly kept surround the spring member **24** and the pivot connector **23.**

As stated above, the main feature of the rotating mechanism is the arrangement of the tightly compressed spring member **24** between the worm **21** and the pivot connector **23** to provide a buffering function during transfer of a rotary driving force from the pinion **22** through the worm **21** to the worm gear **122.** When the worm **21** is forced to bias, the spring member **24** is stretched. When the biasing force is disappeared, the spring member **24** immediately returns to its former shape, thereby returning the worm **21** to its former position.

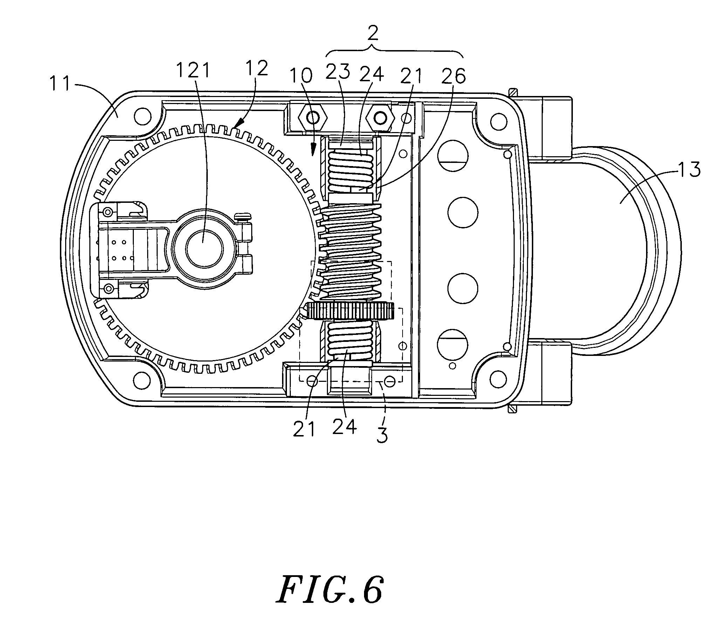

FIG. 6 illustrates a rotating mechanism in accordance with a second embodiment of the present invention. This second embodiment is substantially similar to the aforesaid first embodiment with the exception that this second embodiment has two spring members **24** respectively coupled between the pivot connector **23** and pinion **22** and the two distal ends of the worm **21** to enhance the buffering function.

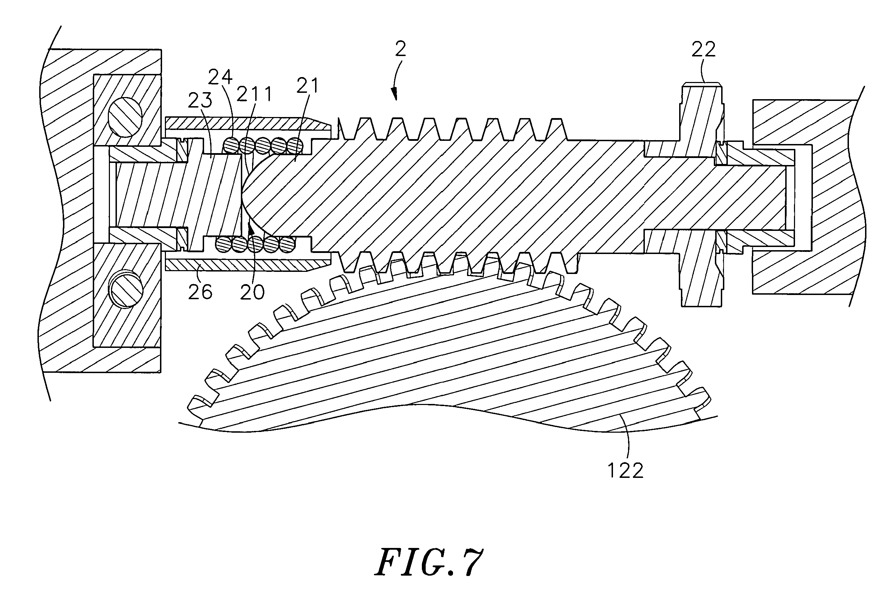

FIG. 7 illustrates a rotating mechanism in accordance with a third embodiment of the present invention. This third embodiment is substantially similar to the aforesaid first embodiment with the exception that this third embodiment eliminates the aforesaid rolling ball **25** and the worm **21** according to this third embodiment has a rounded end **211** kept in contact with one plain end of the pivot connector **23.** Thus, a biasing space **20** is defined within the spring member **24** around the rounded end **211** of the worm **21.** The friction connection between the worm **21** and the pivot connector **23** is not limited to the arrangement shown in FIG. 7. Alternatively, the worm **21** can be made having one plain end stopped against a rounded end of the pivot connector **23.**

In general, the scope of the present invention is the engagement arrangement between the worm gear **122** of the driving module **12** in the holder block **11** and the worm unit **2.** The worm unit **2** comprises a pinion **22** rotatable by a motor **3,** a pivot connector **23** connected to a part in the accommodation chamber **10** of the holder block **11,** a worm **21** set between the pinion **22** and the pivot connector **23** and meshed with the worm gear **122** and rotatable by the pinion **22,** and a spring member **24** supported between the pivot connector **23** and the worm **21.** The spring member **24** defines therein a biasing space **20** within which the worm **21** is biasable relative to the pivot connector **23.** When the worm **21** is stuck in the teeth of the worm gear **122** during rotation of the pinion **22,** the biasing space **20** allows the worm **21** to be biased, avoiding sticking. When the biasing force is disappeared, the spring member **24** immediately returns to its former shape, thereby returning the worm **21** into positive engagement with the worm gear **122.**

As stated above, the invention provides a rotating mechanism having a buffering function and a simple structure. By means of the arrangement of the spring member **24** between the worm **21** and the pivot connector **23,** a biasing space **20** is defined within the spring member **24** for allowing the worm **21** to be biased in case the worm **21** is stuck in the teeth of the worm gear **122** during rotation of the pinion **22.** Therefore, the buffering function of the spring member **24** prevents the worm **21** from getting stuck during operation of the rotating mechanism to adjust the angular position of the antenna, assuring smooth operation of the motor **3** and stable supply of electric current to the motor **3.** Further, the spring member **24** is directly sleeved onto one end of the worm **21** and one end of the pivot connector **23,** saving much space occupation in the holder block **11.** Further, this design of rotating mechanism has a simple structure. Further, this structure of rotating mechanism is inexpensive to manufacture and easy to install.

A prototype of rotating mechanism has been constructed with the features of FIGS. 1∼7. The rotating mechanism functions smoothly to provide all of the features disclosed earlier.

Although particular embodiment of the invention have been described in detail for purposes of illustration, various modifications and enhancements may be made without departing from the spirit and scope of the invention. Accordingly, the invention is not to be limited except as by the appended claims.

### LIST OF REFERENCE SYMBOLS

| Applicant : MOTECK ELECTRIC CORP. | |
|---|---|
| Patent Title : ROTATING MECHANISM HAVING A BUFFERING FUNCTION | |
| 1- holder block unit | 2- worm unit |
| 10- accommodation chamber | 20- biasing space |
| 11- holder block | 21- worm |
| 111- hole | 211- rounded end |
| 12- driving module | 22- pinion |
| 121- transmission rod | 23- pivot connector |
| 1211- actuating portion | 24- spring member |
| 122- worm gear | 25- rolling ball |
| 13- rotating tube | 26- barrel |
| 14- tie screw | |
| 3- motor | L-length |
| A- antenna rotating mechanism | |
| A1- worm gear | |
| A2- worm | |
| A3- swivel frame | |
| A4- holder block | |
| A31- pivot | |
| A4-holder block | |
| A5- spring member | |

## Claims

1. A rotating mechanism, comprising:
a holder block(11) defining therein an accommodation chamber(10);
a transmission rod(121) inserted through said holder block(11), said transmission rod(121) having a first end and a second end opposite to said first end;
a rotating tube(13) fastened to the first end of said transmission rod(121) and connectable to an antenna;
a worm gear(122) fastened to the second end of said transmission rod(121) and suspending in said accommodation chamber(10);
a worm(21) pivotally mounted in said accommodation chamber(10) meshed with said worm gear(122), said worm(21) having opposing first end and second end;
a pinion(22) fastened to the first end of said worm(21); and
a motor(3) adapted for rotating said pinion(22);
wherein the rotating mechanism further comprises a pivot connector(23) pivotally coupled between the second end of said worm(21) and a part in said accommodation chamber(10) of said holder block(11) and a spring member(24) coupled between said pivot connector(23) and said worm(21) and defining therein a biasing space(20) for allowing said worm(21) to be biased relative to said pivot connector(23) to prevent sticking during operation.

2. The rotating mechanism as claimed in claim 1, further comprising a rolling ball(25) set inside said spring member(24) and stopped between said pivot connector(23) and the second end of said worm(21).

3. The rotating mechanism as claimed in claim 1, wherein the second end of said worm(21) is a rounded end(211) stopped against a plain end of said pivot connector(23).

4. The rotating mechanism as claimed in claim 1, further comprising a second spring member(24) coupled between the first end of said worm(21) and a part of said pinion(22).

5. The rotating mechanism as claimed in claim 1, further comprising a barrel(26) surrounding said spring member(24) and said pivot connector(23) and movable with said worm(21).
